# EUROPEAN PATENT APPLICATION

(11) **EP 4 706 898 A1**
(43) Date of publication of application: **11.03.2026**
(21) Application number: 24199477.1
(22) Date of filing: 10.09.2024
(51) Int. Cl.: B25J 9/10, B25J 9/12, B25J 17/02

(54) **ROBOT JOINT ASSEMBLY**

(71) Applicant: Kassow Robots ApS, 2770 Kastrup (DK)
(72) Inventor: KASSOW, Kristian, 2300 Copenhagen S (DK)
(74) Representative: COPA Copenhagen Patents

(57) **Abstract**

A robot joint assembly and a robotic arm with the joint assembly are disclosed. Also, a robot comprising the robotic arm is disclosed. The joint assembly extends along a joint axis between a primary joint assembly end and a secondary joint assembly end and comprises a housing including a first housing part and a second housing part, and an output part arranged at the secondary joint assembly end. The joint assembly also comprises a motor and a strain wave gearing system. The first housing part comprises a plurality of first assembly holes arranged circumferentially around the joint axis and each of the plurality of first assembly holes extending parallel to the joint axis, and wherein the second housing part comprises a plurality of second assembly holes arranged circumferentially around the joint axis and each of the plurality of second assembly holes extending parallel to the joint axis. Each first assembly hole of the plurality of first assembly holes is aligned with a corresponding second assembly hole of the plurality of second assembly holes and is adapted to receive a primary fastening element being inserted parallel to the joint axis from the secondary joint assembly end towards the primary joint assembly end into the first assembly hole and the second assembly hole to mechanically fastening together the first housing part and the second housing part.

## Description

The present disclosure relates to a robot, e.g. a robotic arm, and/or a robot joint assembly for such robot or robotic arm. More particularly, the present disclosure relates to an improved robot joint assembly for performing movement of the robot or robotic.

### BACKGROUND

Robots and in particular robotic arms are widely used to perform a wide variety of automated tasks. Recently, lightweight robots have increased in popularity for assisting human activities, e.g. in production facilities. These robots are commonly known as collaborative robots or cobots.

For robots, such as robotic arms, it is desirous to enhance flexibility and facilitate more compact robot solutions. It is a further objective to make robots and/or robotic arms lighter as well as easier and cheaper to manufacture. Furthermore, reliability and robustness of such lightweight robots is of continuous importance.

### SUMMARY

It is an object of the present disclosure at least to provide improvements of the prior art and/or to solve or reduce problems known from the prior art. It is a further object of the present disclosure to provide an advantageous or at least alternative robot, robotic arm, and/or components thereof.

More particularly, the present disclosure provides a solution, which allows for easier production, use of lighter and less costly materials as well as increases reliability and decreases the risk of failures. Furthermore, the present disclosure also provides for simplification of the robot, robotic arm, and/or components thereof.

Accordingly, the present disclosure comprises a robotic arm and a robot, e.g. a collaborative robot, comprising the robotic arm, wherein the robotic arm is extending between a base end and a tool end and comprising a base at the base end and a plurality of joints including a first joint and a second joint. The present disclosure also relates to a robot joint assembly, e.g. to form one or more of the plurality of joints of the disclosed robot, such as the first joint and/or the second joint.

The present invention is further defined by the appended set of claims.

### GENERAL DESCRIPTION

A robotic arm and a robot, e.g. a collaborative robot, is disclosed. The robot comprises the robotic arm. The robotic arm extends between a base end and a tool end. The robotic arm comprises a base at the base end. The robotic arm may be configured for coupling with a tool at the tool end. For example, the robotic arm may comprise a tool flange, e.g. for connecting the tool, at the tool end.

The robotic arm comprises a plurality of joints connecting the base and the tool end. The plurality of joints may include a first joint and a second joint, and optionally one or more of a third joint, a fourth joint, a fifth joint, a sixth joint and a seventh joint.

The first joint is positioned between the base and the second joint. The second joint may be positioned between the first joint and the tool end and/or between the first joint and the third joint. The third joint may be positioned between the second joint and the tool end and/or between the second joint and the fourth joint. The fourth joint may be positioned between the third joint and the tool end and/or between the third joint and the fifth joint. The fifth joint may be positioned between the fourth joint and the tool end and/or between the fourth joint and the sixth joint. The sixth joint may be positioned between the fifth joint and the tool end and/or between the fifth joint and the seventh joint. The seventh joint may be positioned between the sixth joint and the tool end, such as between the sixth joint and the tool flange at the tool end.

The robotic arm comprises a plurality of motors to cause movement of the robotic arm with respect to a plurality of axes. The plurality of motors includes a first motor and a second motor, and optionally one or more of a third motor, a fourth motor, a fifth motor, a sixth motor and a seventh motor. Any or all of the plurality of motors may be a permanent magnet AC motor. Any or all of the plurality of motors may comprise or be integrated with a gear assembly, e.g. an integral gear, such as a strain wave gear. Hence, any or all of the plurality of motors may be or form part of a gear motor.

The first motor causes movement of the first joint with respect to a first axis. The second motor causes movement of the second joint with respect to a second axis. The third motor may cause movement of the third joint with respect to a third axis. The fourth motor may cause movement of the fourth joint with respect to a fourth axis. The fifth motor may cause movement of the fifth joint with respect to a fifth axis. The sixth motor may cause movement of the sixth joint with respect to a sixth axis. The seventh motor may cause movement of the seventh joint with respect to a seventh axis. The motors may preferably cause rotational movement.

The robotic arm may comprise a plurality of motor controllers, i.e. processing units adapted to control the plurality of motors. For example, the plurality of motor controllers may include a first motor controller, a second motor controller, a third motor controller, a fourth motor controller, a fifth motor controller, a sixth motor controller and/or a seventh motor controller. The first motor controller may be adapted to control the first motor. The second motor controller may be adapted to control the second motor. The third motor controller may be adapted to control the third motor. The fourth motor controller may be adapted to control the fourth motor. The fifth motor controller may be adapted to control the fifth motor. The sixth motor controller may be adapted to control the sixth motor. The seventh motor controller may be adapted to control the seventh motor.

The robotic arm may comprise one or more links. For example, the robotic arm may comprise a link between some or all of the plurality of joints. The links may be provided to extend the reach of the robotic arm. For example, the one or more links may include a first link and a second link. Further the one or more links may include a third link and/or further links. The first link may be arranged between the second joint and the third joint. The second link may be arranged between the fourth joint and the fifth joint. However, other configurations of links may be envisaged.

The present disclosure also relates to a robot joint assembly, e.g. to form one of the plurality of joints of the disclosed robot, such as the first joint and/or the second joint. Accordingly, the robot and/or the robotic arm may comprise a plurality of such robot joint assemblies, e.g. including a first joint assembly and a second joint assembly, and optionally one or more of a third joint assembly, a fourth joint assembly, a fifth joint assembly, a sixth joint assembly, and a seventh joint assembly. For example, the first joint assembly may form the first joint. The second joint assembly may form the second joint. The third joint assembly may form the third joint. The fourth joint assembly may form the fourth joint. The fifth joint assembly may form the fifth joint. The sixth joint assembly may form the sixth joint. The seventh joint assembly may form the seventh joint.

The first joint assembly may comprise the first motor and optionally the first motor controller. The second joint assembly may comprise the second motor and optionally the second motor controller. The third joint assembly may comprise the third motor and optionally the third motor controller. The fourth joint assembly may comprise the fourth motor and optionally the fourth motor controller. The fifth joint assembly may comprise the fifth motor and optionally the fifth motor controller. The sixth joint assembly may comprise the sixth motor and optionally the sixth motor controller. The seventh joint assembly may comprise the seventh motor and optionally the seventh motor controller.

The base of the robotic arm may be adapted to be fastened, such as fixed, to a structure from which the robot is meant to work. The structure may for instance be a factory floor or a mobile robot or a vehicle. The base may comprise a bottom plate and a wall section. The bottom plate may be adapted to abut the structure. The first axis may be substantially perpendicular to the bottom plate. For example, the first axis may be within 10 degrees, such as within 5 degrees, of perpendicular to the bottom plate. The wall section may join the bottom plate, e.g. along a joining line of the bottom plate, such as along a perimeter of the bottom plate. The wall section may extend from the bottom plate to the first joint. The bottom plate and the wall section may form a base housing. The base housing may accommodate a control unit, which is described further below. The robotic arm may be fastened to the structure by fastening bolts. For example, the base may be fastened to the structure by the fastening bolts. Accordingly, the base may comprise one or more attachment holes, e.g. adapted to receive the fastening bolts.

The robot may comprise a control unit. The control unit may be arranged at the base end of the robotic arm. For example, the control unit may form part of the base of the robotic arm. The control unit may be arranged between the robotic arm and a structure to which the robotic arm is to be fastened. The structure may be a factory floor or another structure from which the robotic arm is meant to work. Thus, the base of the robotic arm may comprise the control unit. The first motor controller may be arranged between the control unit and the first motor.

A joint assembly according to the present disclosure, such as one or more or any of the first joint assembly, the second joint assembly, the third joint assembly, the fourth joint assembly, the fifth joint assembly, the sixth joint assembly, and the seventh joint assembly, extends along a joint axis (which may be the axis of the respective joint, i.e. the first, second, third, fourth, fifth, sixth or seventh axis) between a primary joint assembly end and a secondary joint assembly end. The joint assembly further comprises a housing, an output part, e.g. arranged at the secondary joint assembly end, and a motor, such as the first, second, third, fourth, fifth, sixth or seven motor as described above. The motor is adapted to cause movement (e.g. rotational movement about the joint axis) between the housing and the output part of the joint assembly.

The joint assembly may comprise a hollow passage along the joint axis from the primary joint assembly end to the secondary joint assembly end. The hollow passage may extend through the motor. A tube element may form part of the hollow passage. The hollow passage may allow wires to extend through the joint assembly and may provide for communication along the robotic arm through the joint assembly, e.g. from the base to the tool end.

The housing may comprise a plurality of housing parts, e.g. including a first housing part, a second housing part. The plurality of housing parts may further comprise a third housing part. In some examples, the plurality of housing part may comprise further housing parts. The first housing part may be located near the secondary joint assembly end. The second housing part may be located near the primary joint assembly end. The first housing part may be between the secondary joint assembly end and the second housing part, along the joint axis. The second housing part may be between the first housing part and the primary joint assembly end, along the joint axis. The third housing part may be between the first housing part and the second housing part, along the joint axis.

The robot joint assembly may comprise an output bearing assembly. The output bearing assembly may couple the output part and the housing, such as the output part and the first housing part of the housing. The output bearing assembly may allow rotational movement around the joint axis between the output part and housing, such as between the output part and the first housing part. The output bearing assembly may restrict and/or prevent movement other than rotational movement around the joint axis between the output part and the housing, such as between the output part and the first housing part. The output bearing assembly may be a cross roller bearing. The output bearing assembly may comprise an inner part, an outer part, and a plurality of rollers disposed between the inner part and the outer part. The outer part may be fastened to the housing, such as to the first housing part, or may form (at least part of) the housing. The inner part may be fastened to the output part or may form (at least part of) the output part.

The motor may be a permanent magnet AC motor. The motor of the robot joint assembly comprises a rotor and a stator. The rotor and the stator are coaxially aligned. The rotor and the stator may be coaxially aligned along a rotor axis, which preferably is the joint axis. The rotor may comprise a rotor magnet (e.g. a permanent magnet) and/or a rotor shaft. The rotor magnet may be a permanent magnet. The rotor shaft extends, e.g. along the rotor axis, which preferably is the joint axis, from a primary rotor end to a secondar rotor end. The primary rotor end may be arranged towards the primary joint assembly end. The secondary rotor end may be arranged towards the secondary joint assembly end. The rotor is turning the rotor shaft. In some examples, the rotor may comprise the rotor shaft. Alternatively, the rotor shaft may form part of a gear, such as a strain wave gearing system (described below), or the rotor shaft may be an independent element.

The robot joint assembly may further comprise a gear, such as a strain wave gearing system. The strain wave gearing system comprises a flexspline, a circular spline, and a wave generator. The flexspline extends, e.g. along the joint axis, between an open flexspline end and a flexspline base. The flexspline is forming a flexspline cavity. The flexspline is fastened to the output part. For example, the flexspline base may be fastened to the output part. The flexspline may comprise an outer teething, e.g. at the open flexspline end. The circular spline is fastened to the first housing part, e.g. the circular spline may be integrally formed with a first housing part. The circular spline is arranged to encircle the flexspline at the open flexspline end. The circular spline may comprise an inner teething, e.g. to engage with the outer teething of the flexspline. The wave generator is fastened to the rotor shaft. The wave generator is arranged inside the flexspline cavity at the open flexspline end. The wave generator is rotated by the rotor, e.g. by the rotor shaft. Thereby, the motor may provide for rotational movement of the output part relative to the housing and/or housing parts.

The first housing part may accommodate the strain wave gearing system. The second housing part may accommodate the motor, such as the stator and/or the rotor of the motor. In some examples, the third housing part may accommodate the motor, such as the stator and/or the rotor of the motor.

The robot joint assembly may comprise one or more, such as a plurality of, rotor bearing assemblies coupling the housing and the rotor shaft, such as coupling the rotor shaft and any of the first housing part, the second housing part and/or the third housing part. The rotor bearing assembly/assemblies may allow rotational movement around the joint axis between the housing and the rotor shaft, e.g. between the first housing part and the rotor shaft, between the second housing part and the rotor shaft, and/or between the third housing part and the rotor shaft. For example, a rotor bearing assembly may couple the first housing part and the rotor shaft and may allow rotational movement around the joint axis between the first housing part and the rotor shaft. Alternatively or additionally, a rotor bearing assembly may couple the second housing part and the rotor shaft, and may allow rotational movement around the joint axis between the second housing part and the rotor shaft. Alternatively or additionally, a rotor bearing assembly may couple the third housing part and the rotor shaft and may allow rotational movement around the joint axis between the third housing part and the rotor shaft. In some examples, the third housing part accommodates a rotor bearing assembly.

The first housing part may comprise a plurality of first assembly holes. The plurality of first assembly holes may be arranged circumferentially around the joint axis, e.g. along a first assembly hole circle in a cross-sectional plane perpendicular to the joint axis. Each of the plurality of first assembly holes may extend parallel to the joint axis. The plurality of first assembly holes may include at least three first assembly holes, such as at least five first assembly holes, such as at least nine first assembly holes, such as at least 15 first assembly holes. The plurality of first assembly holes may include between 3-36 first assembly holes, such as between 5-30 first assembly holes, such as between 9-24 first assembly holes, such as between 15-20 first assembly holes. The plurality of first assembly holes may be individually spaced by a first assembly hole angle around the joint axis, e.g. neighbouring first assembly holes of the plurality of first assembly holes may be angularly spaced by the first assembly hole angle. The first assembly hole angle may be measured from centre to centre of the neighbouring first assembly holes. The first assembly hole angle may be between 12-72 degrees, such as between 15-40 degrees, such as between 18-24 degrees. The first housing part may comprise a first flange, e.g. extending perpendicular to the joint axis. The plurality of first assembly holes may be arranged in the first flange, such as extending through the first flange.

The second housing part may comprise a plurality of second assembly holes. The plurality of second assembly holes may be arranged circumferentially around the joint axis, e.g. along a second assembly hole circle in a cross-sectional plane perpendicular to the joint axis. The second assembly hole circle may be the first assembly hole circle. Each of the plurality of second assembly holes may extend parallel to the joint axis. The plurality of second assembly holes may include at least three second assembly holes, such as at least five second assembly holes, such as at least nine second assembly holes, such as at least 15 second assembly holes. The plurality of second assembly holes may include between 3-36 second assembly holes, such as between 5-30 second assembly holes, such as between 9-24 second assembly holes, such as between 15-20 second assembly holes. The number of second assembly holes may be the same as the number of first assembly holes. The plurality of second assembly holes may be individually spaced by a second assembly hole angle around the joint axis, e.g. neighbouring second assembly holes of the plurality of second assembly holes may be angularly spaced by the second assembly hole angle. The second assembly hole angle may be measured from centre to centre of the neighbouring second assembly holes. The second assembly hole angle may be between 12-72 degrees, such as between 15-40 degrees, such as between 18-24 degrees. The second housing part may comprise a second flange, e.g. extending perpendicular to the joint axis. The plurality of second assembly holes may be arranged in the second flange, such as extending through the second flange.

The third housing part may comprise a plurality of third assembly holes. The plurality of third assembly holes may be arranged circumferentially around the joint axis, e.g. along a third assembly hole circle in a cross-sectional plane perpendicular to the joint axis. The third assembly hole circle may be the second assembly hole circle and/or the first assembly hole circle. Each of the plurality of third assembly holes may extend parallel to the joint axis. The plurality of third assembly holes may include at least three third assembly holes, such as at least five third assembly holes, such as at least nine third assembly holes, such as at least 15 third assembly holes. The plurality of third assembly holes may include between 3-36 third assembly holes, such as between 5-30 third assembly holes, such as between 9-24 third assembly holes, such as between 15-20 third assembly holes. The number of third assembly holes may be the same as the number of first assembly holes and/or the number of second assembly holes. The plurality of third assembly holes may be individually spaced by a third assembly hole angle around the joint axis, e.g. neighbouring third assembly holes of the plurality of third assembly holes may be angularly spaced by the third assembly hole angle. The third assembly hole angle may be measured from centre to centre of the neighbouring third assembly holes. The third assembly hole angle may be between 12-72 degrees, such as between 15-40 degrees, such as between 18-24 degrees.

Each first assembly hole of the plurality of first assembly holes may be aligned with a corresponding second assembly hole of the plurality of second assembly holes and/or may be aligned with a corresponding third assembly hole of the plurality of third assembly holes. Each second assembly hole of the plurality of second assembly holes may be aligned with a corresponding first assembly hole of the plurality of first assembly holes and/or may be aligned with a corresponding third assembly hole of the plurality of third assembly holes. Each third assembly hole of the plurality of third assembly holes may be aligned with a corresponding first assembly hole of the plurality of first assembly holes and/or may be aligned with a corresponding second assembly hole of the plurality of second assembly holes.

Each first assembly hole of the plurality of first assembly holes, each second assembly hole of the plurality of second assembly holes, and/or each third assembly hole of the plurality of third assembly holes, respectively, is adapted to receive a primary fastening element. The primary fastening element may be inserted parallel to the joint axis from the secondary joint assembly end towards the primary joint assembly end into the first assembly hole and the second assembly hole to mechanically fasten the first housing part and the second housing part together. Alternatively or additionally, the primary fastening element may be inserted parallel to the joint axis from the secondary joint assembly end towards the primary joint assembly end into the first assembly hole, the second assembly hole, and the third assembly hole to mechanically fasten the first housing part, the second housing part, and the third housing part together.

The first housing part and the second housing part, and optionally the third housing part, may be mechanically fastened together by a plurality of primary fastening elements, e.g. each primary fastening element of the plurality of primary fastening elements may be inserted parallel to the joint axis from the secondary joint assembly end towards the primary joint assembly end into a first assembly hole of the plurality of first assembly holes and a second assembly hole of the plurality of second assembly holes, and optionally also into a third assembly hole of the plurality of third assembly holes.

The primary fastening element may comprise a head and a shank. For example, the primary fastening element may be a bolt. When the primary fastening element is inserted into the first assembly hole and the second assembly hole, and optionally the third assembly hole, the head of the primary fastening element may be arranged towards the secondary joint assembly end and the shank may be extending from the head towards the primary joint assembly end.

In addition to mechanically fastening the housing parts together (such as the first housing part and the second housing part, and optionally the third housing part), the primary fastening element(s) may mechanically fasten the housing parts together (such as the first housing part and the second housing part, and optionally the third housing part) and a robot body element of the robotic arm. The robot body element may form one side proximal to the joint formed by the robot joint assembly.

For example, the robot body element may form the base of the robotic arm. Alternatively, the robot body element may be a link of the robotic arm. Accordingly, the same fastening element(s), i.e. the primary fastening element(s), may be used to fasten the housing parts together (e.g. housing parts individually accommodating the strain wave gearing system, the rotor bearing assembly, and the motor), as well as fastening the housing to the robot body element. Thereby, weight may be reduced, and manufacturing may be made easier.

The first housing part may comprise a first primary side. The first primary side may be parallel to the joint axis. The first primary side may encircle the joint axis. In the case of the first housing comprising the first flange, the first flange may extend perpendicular to the first primary side. The first primary side may generally form a cylinder along the joint axis. The first primary side may be corrugated.

The first primary side may comprise a plurality of radial recesses. The plurality of radial recesses may include at least three radial recesses, such as at least five radial recesses, such as at least nine radial recesses, such as at least 15 radial recesses. The plurality of radial recesses may include between 3-36 radial recesses, such as between 5-30 radial recesses, such as between 9-24 radial recesses, such as between 15-20 radial recesses. The number of radial recesses may be the same as the number of first assembly holes. Each first assembly hole of the plurality of first assembly holes may be aligned with a corresponding radial recess of the plurality of radial recesses. Because of the radial recesses, an inscribed circle radius of an inscribed circle of the first primary side may be smaller than a circumscribed circle radius of a circumscribed circle of the first primary side. The radial recesses provide the advantage that the primary fastening elements may be arranged closer to the joint axis, thereby facilitating a more compact first housing part.

Each of the plurality of radial recesses may have a recess length along the joint axis. The recess length may be between 15-35 mm, such as between 20-30 mm, such as between 23-27 mm. The recess length may correspond to the length of the primary fastening elements, e.g. the shank length or nominal length of the primary fastening elements, i.e. the length of the fastening element excluding the head.

Each of the plurality of radial recesses may form a circular arc in a plane perpendicular to the joint axis. For example, each of the plurality of radial recesses may form a circular arc between 50-180 degrees, e.g. a semicircle.

Each of the plurality of radial recesses may have a recess depth along the radial direction, i.e. perpendicular to the joint axis. The recess depth may be the difference between the inscribed circle radius of the inscribed circle of the first primary side and the circumscribed circle radius of the circumscribed circle of the first primary side. The recess depth may be between 2-10 mm, such as between 3-5 mm.

The outer part of the output bearing assembly may be fastened to the housing, such as to the first housing part, or may form (at least part of) the housing. For example, the outer part of the output bearing assembly may be fastened to the first housing part by a plurality of secondary fastening elements. The plurality of secondary fastening elements may be arranged circumferentially around the joint axis, e.g. along a secondary fastening element circle in a cross-sectional plane perpendicular to the joint axis. Each of the plurality of secondary fastening elements may extend parallel to the joint axis. The plurality of secondary fastening elements may include at least three secondary fastening elements, such as at least five secondary fastening elements, such as at least secondary fastening elements, such as at least 15 secondary fastening elements. The plurality of secondary fastening elements may include between 3-36 secondary fastening elements, such as between 5-30 secondary fastening elements, such as between 9-24 secondary fastening elements, such as between 15-20 secondary fastening elements. The number of secondary fastening elements may be the same as the number of first assembly holes. The plurality of secondary fastening elements may be individually spaced by a secondary fastening element angle around the joint axis, e.g. neighbouring secondary fastening elements of the plurality of secondary fastening elements may be angularly spaced by the secondary fastening element angle. The secondary fastening element angle may be measured from centre to centre of the neighbouring secondary fastening elements. The secondary fastening element angle may be between 12-72 degrees, such as between 15-40 degrees, such as between 18-24 degrees. The secondary fastening element angle may be the same as the first assembly hole angle, the second assembly hole angle, and/or the third assembly hole angle.

Each of the secondary fastening element may comprise a head and a shank. For example, the secondary fastening elements may be bolts. The head of the secondary fastening element may be arranged towards the secondary joint assembly end and the shank may be extending from the head towards the primary joint assembly end.

Each of the plurality of secondary fastening elements may be arranged between two neighbouring first assembly holes of the plurality of first assembly holes of the first housing part, in a cross-sectional plane perpendicular to the joint axis. As mentioned previously, neighbouring first assembly holes of the plurality of first assembly holes are angularly spaced, in the cross-sectional plane perpendicular to the joint axis, by the first assembly hole angle around the joint axis. An angular spacing between a first assembly hole of the plurality of first assembly holes and a secondary fastening element of the plurality of secondary fastening elements, in the cross-sectional plane perpendicular to the joint axis, may be less than the first assembly hole angle, such as between 30-70% of the first assembly hole angle, such as half of the first assembly hole angle.

As mentioned previously, the plurality of first assembly holes may be arranged along a first assembly hole circle in a cross-sectional plane perpendicular to the joint axis. The first assembly hole circle may have a first assembly hole circle radius in the cross-sectional plane perpendicular to the joint axis. The second assembly holes may be arranged along a second assembly hole circle in the cross-sectional plane perpendicular to the joint axis. The second assembly hole circle may have a second assembly hole circle radius in the cross-sectional plane perpendicular to the joint axis. The third assembly holes may be arranged along a third assembly hole circle in the cross-sectional plane perpendicular to the joint axis. The third assembly hole circle may have a third assembly hole circle radius in the cross-sectional plane perpendicular to the joint axis. It is noted that the first assembly holes and the second assembly holes (and the third assembly holes, if present) may be arranged along the same assembly hole circle. Thus, the first assembly hole circle, the second assembly hole circle and the third assembly hole circle may be the same assembly hole circle. The first assembly hole circle radius, the second assembly hole circle radius and the third assembly hole circle radius may be the same assembly hole circle radius.

The plurality of secondary fastening elements may be arranged along a secondary fastening element circle in the cross-sectional plane perpendicular to the joint axis. The secondary fastening element circle may have a secondary fastening element circle radius in the cross-sectional plane perpendicular to the joint axis. The first assembly hole circle radius is preferably the same or larger than the secondary fastening element circle radius. The first assembly hole circle radius and the secondary fastening element circle radius may differ by less than 5 mm, such as less than 3.5 mm, such as less than 3 mm, such as less than 2.5 mm. The ability to arrange the first assembly holes and the secondary fastening elements along near coinciding circles, may be enabled by the radial recesses, as described earlier. Thereby, the first housing part may be made more compact, i.e. the outer diameter of the first housing part may be reduced while maintaining a certain inner diameter, allowing, e.g., the strain wave gearing system, to be accommodated therein.

The robot joint assembly may comprise a plurality of interim fastening elements. The interim fastening elements may mechanically fasten the first housing part and the second housing part (and optionally the third housing part) together. The plurality of interim fastening elements may be arranged circumferentially around the joint axis, e.g. along an interim fastening element circle in a cross-sectional plane perpendicular to the joint axis. Each of the plurality of interim fastening elements may extend parallel to the joint axis. Each of the plurality of interim fastening elements may be inserted parallel to the joint axis from the primary joint assembly end towards the secondary joint assembly end. Each of the interim fastening elements may comprise a head and a shank. For example, the interim fastening elements may be bolts. The heads of the interim fastening elements may be arranged towards the primary joint assembly end and the shanks may be extending from the heads towards the secondary joint assembly end.

The plurality of interim fastening elements may include at least two interim fastening elements, such as at least four interim fastening elements, such as at least five interim fastening elements. The plurality of interim fastening elements may include between 2-5 interim fastening elements, such as between 3-4 interim fastening elements. The number of interim fastening elements may be less than the number of first assembly holes. The plurality of interim fastening elements may be individually spaced by an interim fastening element angle around the joint axis, e.g. neighbouring interim fastening elements of the plurality of interim fastening elements may be angularly spaced by the interim fastening element angle. The interim fastening element angle may be measured from centre to centre of the neighbouring interim fastening elements. The interim fastening element angle may be between 72-180 degrees, such as between 90-120 degrees.

Each of the plurality of interim fastening elements may be arranged between two neighbouring first assembly holes of the plurality of first assembly holes of the first housing part, in a cross-sectional plane perpendicular to the joint axis. As mentioned previously, neighbouring first assembly holes of the plurality of first assembly holes are angularly spaced in the cross-sectional plane perpendicular to the joint axis by the first assembly hole angle around the joint axis. An angular spacing between a first assembly hole of the plurality of first assembly holes and an interim fastening element of the plurality of interim fastening elements in the cross-sectional plane perpendicular to the joint axis may be less than the first assembly hole angle, such as between 30-70% of the first assembly hole angle, such as half of the first assembly hole angle.

Each of the plurality of interim fastening elements may be arranged at the same angular position around the joint axis as at least one of the plurality of secondary fastening elements.

The plurality of interim fastening elements may be arranged along an interim fastening element circle in the cross-sectional plane perpendicular to the joint axis. The interim fastening element circle may have an interim fastening element circle radius in the cross-sectional plane perpendicular to the joint axis. The first assembly hole circle radius is preferably the same or substantially the same as the interim fastening element circle radius. The first assembly hole circle radius and the interim fastening element circle radius may differ by less than 2 mm, such as less than 1 mm.

The interim fastening elements provide for an interim assembly of the joint assembly, which allows for transport as well as testing and calibration of the joint assembly prior to installation in the robotic arm. Furthermore, the interim assembly facilitates easier installation of the joint assembly in the robotic arm. The interim fastening elements may not serve a structural purpose once the joint assembly is installed in the robotic arm and the primary fastening elements are mounted. However, even so, the interim fastening elements may be maintained as part of the joint assembly.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating exemplary joints,
Fig. 3 schematically illustrates a perspective view of an exemplary robot joint assembly,
Figs. 4A and 4B schematically illustrates half of cross-sectional views of an exemplary robot joint assembly,
Fig. 5 schematically illustrates a cross-sectional view of the first housing part,
Fig. 6 schematically illustrates an exemplary output bearing assembly, and
Fig. 7 schematically illustrates half of a cross-sectional view of an exemplary robot joint assembly.

### DETAILED DESCRIPTION

Various exemplary embodiments and details are described hereinafter with reference to the figures, when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

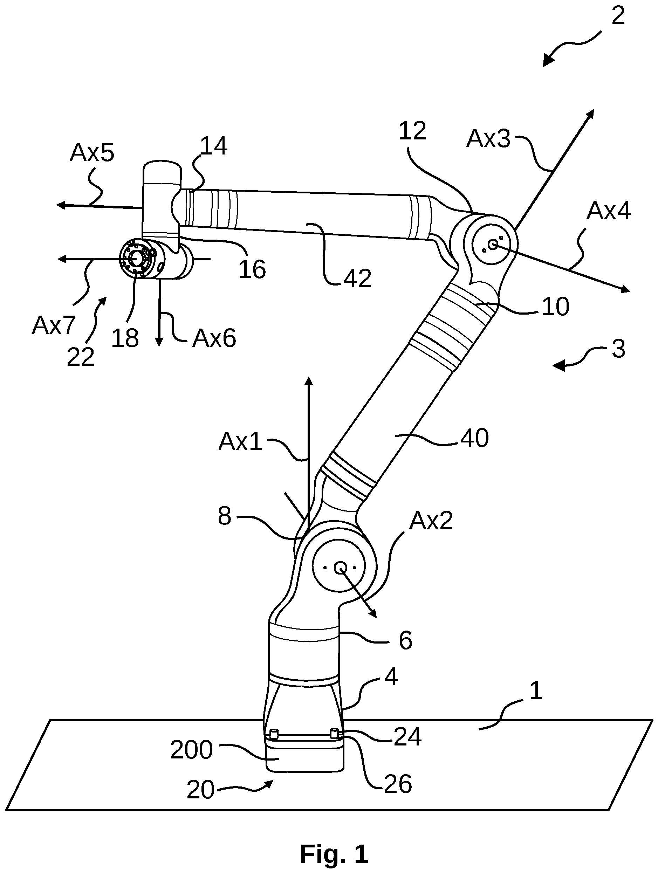

Fig. 1 is a schematic diagram illustrating an exemplary robot 2, which in the present example comprises a robotic arm 3, more particularly, a seven-axis robotic arm.

The robotic arm 3 extends between a base end 20 and a tool end 22 and comprises a base 4 at the base end 20. A tool flange for connection with a tool may preferably be arranged at the tool end 22 of the robotic arm. The robotic arm 3 further comprises a plurality of joints 6, 8, 10, 12, 14, 16, 18.

The plurality of joints 6, 8, 10, 12, 14, 16, 18 connects the base 4 and the tool end 22. In the illustrated example, the plurality of joints are seven joints, i.e. including a first joint 6, a second joint 8, a third joint 10, a fourth joint 12, a fifth joint 14, a sixth joint 16 and a seventh joint 18. However, in other examples, the robotic arm may comprise fewer or more joints. For example, in another configuration, the robotic arm 3 may comprise only three joints, such as the first, second and third joints 6, 8, 10.

The first joint 6 is positioned between the base 4 and the second joint 8. The second joint 8 is positioned between the first joint 6 and the third joint 10. The third joint 10 is positioned between the second joint 8 and the fourth joint 12. The fourth joint 12 is positioned between the third joint 10 and the fifth joint 14. The fifth joint 14 is positioned between the fourth joint 12 and the sixth joint 16. The sixth joint 16 is positioned between the fifth joint 14 and the seventh joint 18. The seventh joint 18 is positioned between the sixth joint 16 and the tool end 22.

The plurality of joints 6, 8, 10, 12, 14, 16, 18 causes movement of the robotic arm 3, e.g. movement of the tool end 22 relative to the base end 20. Each joint provides for rotation about a respective axis. The first joint 6 provides for rotation about a first axis Ax1. The second joint 8 provides for rotation about a second axis Ax2. The third joint 10 provides for rotation about a third axis Ax3. The fourth joint 12 provides for rotation about a fourth axis Ax4. The fifth joint 14 provides for rotation about a fifth axis Ax5. The sixth joint 16 provides for rotation about a sixth axis Ax6. The seventh joint 18 provides for rotation about a seventh axis Ax7.

The robotic arm 3 may be put in some configurations, where none of the seven axes Ax1-Ax7 is parallel. However, in other configurations two or more of the seven axes Ax1-Ax7 may be parallel. As illustrated, the second axis Ax2 may be non-parallel with the first axis Ax1. The third axis Ax3 may be non-parallel with the second axis Ax2. The fourth axis Ax4 may be non-parallel with the third axis Ax3. The fifth axis Ax5 may be non-parallel with the fourth axis Ax4. The sixth axis Ax6 may be non-parallel with the fifth axis Ax5. The seventh axis Ax7 may be non-parallel with the sixth axis Ax6.

The robotic arm may comprise a plurality of motors as described in more detail in relation to later figures, e.g. including a motor for each of the plurality of joints 6, 8, 10, 12, 14, 16, 18. Each of the plurality of motors may cause movement of a respective joint of the plurality of joints 6, 8, 10, 12, 14, 16, 18. For example, a first motor may cause movement of the first joint 6 with respect to the first axis Ax1. A second motor may cause movement of the second joint 8 with respect to the second axis Ax2. A third motor may cause movement of the third joint 10 with respect to the third axis Ax3, etc.

The robotic arm 3 may comprise one or more links 40, 42 between some or all of the plurality of joints 6, 8, 10, 12, 14, 16, 18, e.g. to extend the reach of the robotic arm. For example, the robotic arm 3 may comprise a first link 40 between the second joint 8 and the third joint 10, and a second link 42 between the fourth joint 12 and the fifth joint 14.

The robotic arm 3 is fastened at the base end 20 to a structure 1, which may be a factory floor or another structure from which the robotic arm 3 is meant to work. In some examples, the structure 1 may be part of a movable unit, such as a mobile robot or a vehicle, which would allow the robot 2 or at least the robotic arm 3 to be moved between different positions. The robotic arm 3 may be fastened to the structure 1 by fastening bolts 24. More particularly, the base 4 may be fastened to the structure 1 by the fastening bolts 24. Accordingly, the base 4 may comprise one or more attachment holes 26 adapted to receive the fastening bolts 24.

As illustrated, the robot 2 further comprises a control unit 200, which in the present example may form an integral part of the base 4 of the robotic arm 3 or may be arranged between the base 4 and the structure 1.

Although being described in relation to a robotic arm 3 being operable relative to seven axes, the present disclosure may alternatively be applied to a robot having only six axes, or even fewer axes. For example, with respect to the example illustrated in Fig. 1, movement around the third axis Ax3 may be omitted to obtain a robot operable relative to six axes.

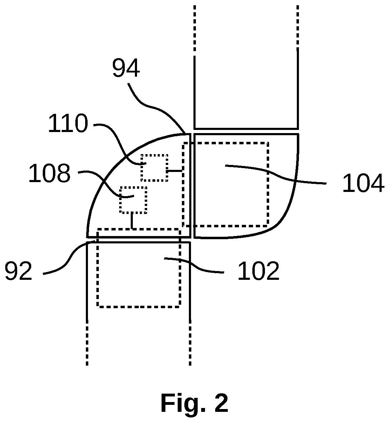

Fig. 2 is a schematic diagram illustrating two exemplary joints 92, 94, e.g. a primary joint 92 and a secondary joint 94. The exemplary joints 92, 94 may be two successive joints of the plurality of joints 6, 8, 10, 12, 14, 16, 18 indicated in Fig. 1. For example, the primary joint 92 may be the first joint 6 of Fig. 1 and the secondary joint 94 may be the second joint 8 of Fig. 1.

Also illustrated is a primary motor 102 provided to rotate the primary joint 92. A secondary motor 104 is provided to rotate the secondary joint 94. Thus, the primary motor 102 may be a first motor for causing movement of the first joint 6 with respect to the first axis Ax1 of Fig. 1. The secondary motor 104 may be a second motor for causing movement of the second joint 8 with respect to the second axis Ax2 of Fig. 1. The primary motor 102 and/or the secondary motor 104 may be a permanent magnet AC motor. Furthermore, the primary motor 102 and/or the secondary motor 104 may comprise or be integrated with a gear assembly, e.g. an integral gear, such as a strain wave gear. Hence, the primary motor 102 and/or the secondary motor 104 may be or may form part of a gear motor.

One or more motor controller units 108, 110 may be provided and adapted to control the motors 102, 104. A primary motor controller unit 108 may be adapted to control the primary motor 102. A secondary motor controller unit 110 may be adapted to control the secondary motor 104.

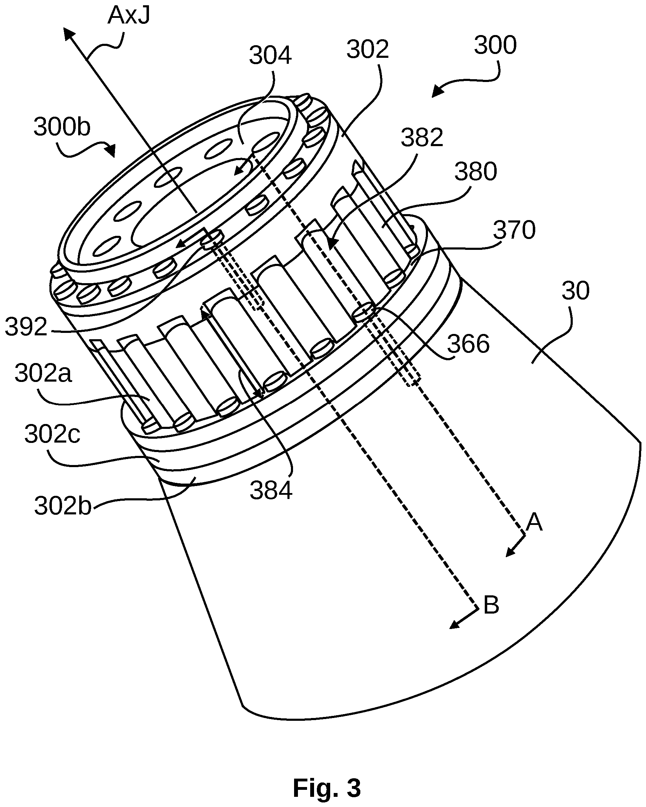

Fig. 3 schematically illustrates a perspective view of an exemplary robot joint assembly 300 fastened to an exemplary robot body element 30, which in the illustrated example may be the base 20 of the robotic arm 3 as illustrated in Fig. 1. However, the robot body element 30 might alternatively be another element forming one side proximal to the joint of the robotic arm which the robot joint assembly 300 is to form. For example, the robot body element 30 may, alternatively, be a joint housing of an adjacent joint or an adjacent link.

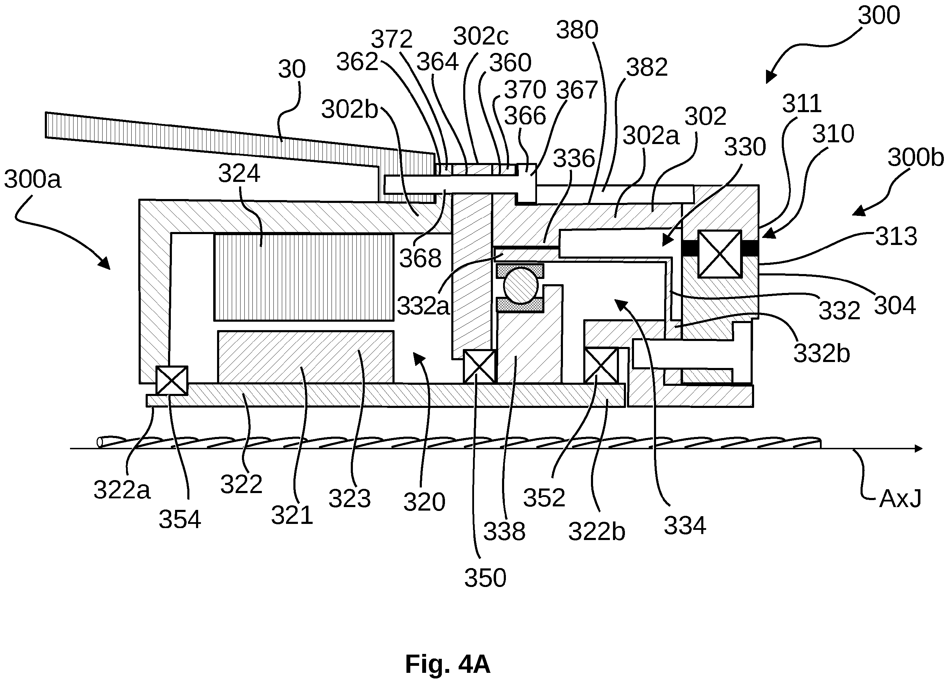

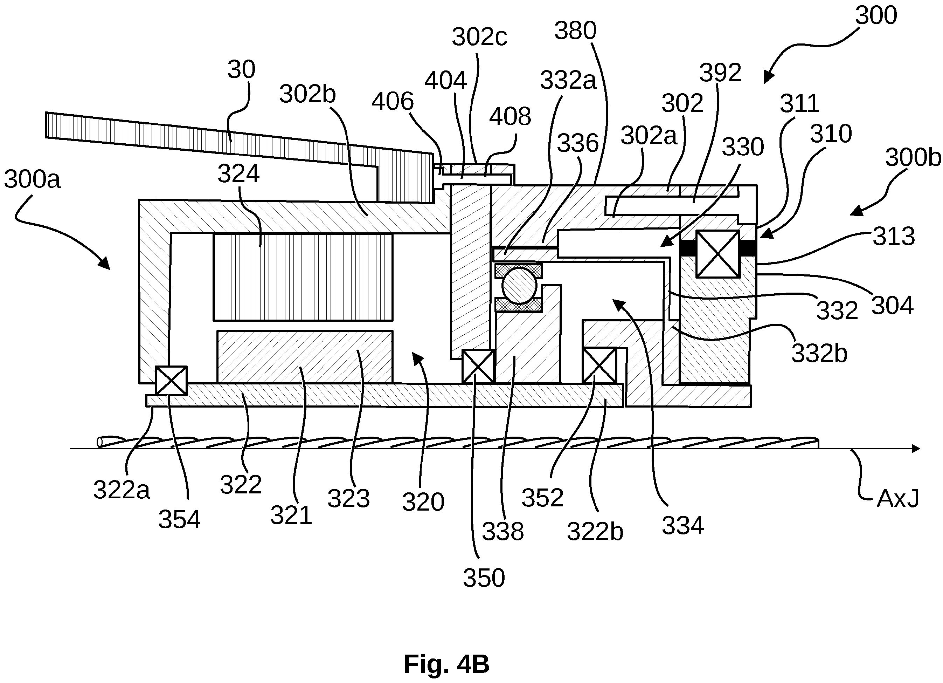

Figs. 4A and 4B schematically illustrate half of cross-sectional views of an exemplary robot joint assembly 300, such as the robot joint assembly 300 of Fig. 3. The robot joint assembly 300 may be forming a joint of a robotic arm, such as any of the joints 6, 8, 10, 12, 14, 16, 18 of the robotic arm 3 of Fig. 1, and/or the primary joint 92 or the secondary joint 94 of Fig. 2.

The cross-sectional views are seen with a joint axis AxJ of the joint assembly 300 extending left-right in the figures. The joint assembly 300 is generally symmetrical along the joint axis AxJ, and therefore, only half of the cross section is shown. However, importantly, and as also illustrated by the difference between Figs. 4A and 4B, the cross section of the joint assembly 300 may vary for different angular positions of the cross-sectional view. Fig. 4A illustrates the cross-sectional view at the angular position illustrated by the dashed line A in Fig. 3, and Fig. 4B illustrates the cross-sectional view at the angular position illustrated by the dashed line B in Fig. 3.

In the following, Figs. 3, 4A and 4B are described in combination.

The joint assembly 300 extends along the joint axis AxJ between a primary joint assembly end 300a and a secondary joint assembly end 300b. The joint assembly 300 comprises a housing 302 and an output part 304. In the illustrated examples, the output part 304 is arranged at the secondary joint assembly end 300b.

The housing 302 comprises a first housing part 302a and a second housing part 302b. In the illustrated example, the housing 302 also comprises a third housing part. In some examples, two of the housing parts of the illustrated example, e.g. the second housing part 302b and the third housing part 302c or the first housing part 302a and the third housing part 302c, may be integrated to form one single housing part.

The first housing part 302a is located near the secondary joint assembly end 300b. The second housing part 302b is located near the primary joint assembly end 300a. The first housing part 302a is between the secondary joint assembly end 300b and the second housing part 302b, along the joint axis AxJ. The second housing part 302b is between the first housing part 302a and the primary joint assembly end 300a, along the joint axis AxJ. The third housing part 302c may be between the first housing part 302a and the second housing part 302b, along the joint axis AxJ.

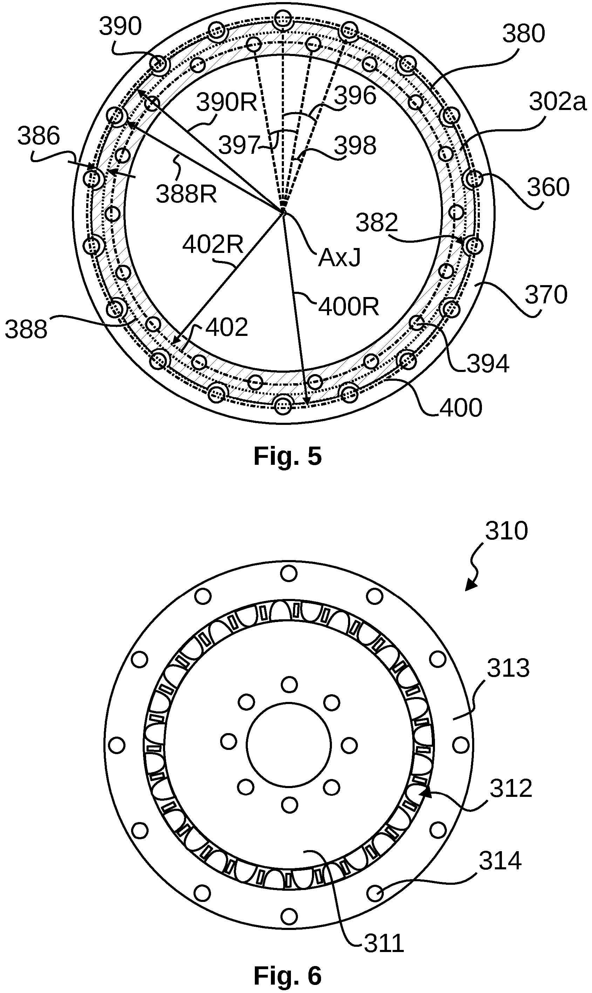

The joint assembly 300 comprises an output bearing assembly 310 coupling the output part 304 and the first housing part 302a while allowing rotational movement around the joint axis AxJ between the output part 304 and the first housing part 302a. The output bearing assembly 310 may be a cross roller bearing. An exemplary output bearing assembly 310 is further exemplified in Fig. 6.

The joint assembly 300 comprises a motor 320 with a rotor 321 and a stator 324. The motor 320 is causing rotational movement between the housing 302 and the output part 304. The rotor 321 is turning, a rotor shaft 322. The rotor shaft 322 may be a part of the rotor 321. In other examples, the rotor shaft 322 may form part of a gearing assembly of the joint assembly 300. In still further examples the rotor shaft 322 may be an independent element. Hence, in some examples, the rotor 321 may comprise the rotor shaft 322. In other examples, the rotor 321 may be connected to the rotor shaft 322. The rotor 321 may comprise a rotor magnet 323. The rotor magnet 323 may be a permanent magnet. The rotor shaft 322 extends along a rotor axis, which in the presently illustrated example is the same as the joint axis AxJ, from a primary rotor end 322a to a secondary rotor end 322b. The rotor 321, the rotor shaft 322 and the stator 314 are coaxially aligned along the rotor axis, which in the presently illustrated example is the joint axis AxJ.

The joint assembly 300 further comprises a strain wave gearing system 330. The gearing system 330 translates the rotational movement of the motor 320 to rotational movement between the housing 302 (the first, second and/or third housing parts 302a, 302b, 302c) and the output part 304. In some examples, other gearing systems as known in the art might alternatively or additionally be utilized.

The strain wave gearing system 330 comprises a flexspline 332 extending along the joint axis AxJ between an open flexspline end 332a and a flexspline base 332b. The flexspline base 332 may have a flexspline centre aperture. The flexspline 332 forms a flexspline cavity 334. In the present example, the open flexspline end 332a is arranged towards the primary joint assembly end 300a and the flexspline base 332b is arranged towards the secondary joint assembly end 300b. The flexspline 332 is fastened to the output part 304. In the presently illustrated example, the flexspline base 332b is fastened to the output part 304.

The strain wave gearing system 330 further comprises a circular spline 336 and a wave generator 338. The circular spline 336 is fastened to the housing 302. More specifically, the circular spline 336 is fastened to the first housing part 302a. In some examples, the circular spline 336 may form an integral part of the first housing part 302a. In other words, the first housing part 302a may form the circular spline 336. The circular spline 336 is arranged to encircle the flexspline 332 at the open flexspline end 332a. As will be known to the skilled person, the flexspline comprises an outer teething at the open flexspline end 332a engaging with an inner teething of the circular spline 336. The wave generator 338 is fastened to the rotor shaft 322 and is arranged inside the flexspline cavity 334 at the open flexspline end 332a.

The joint assembly further comprises a number of rotor bearing assemblies 350, 352, 354 to support the rotor shaft 322. In the present illustrated example, the joint assembly comprises a first rotor bearing assembly 350, a second rotor bearing assembly 352 and a third rotor bearing assembly 354. However, the joint assembly may be realised with fewer or more rotor bearing assemblies. The first rotor bearing assembly 350 is arranged between the motor 320 and the strain wave gearing system 330. The second rotor bearing assembly 352 is arranged inside the flexspline cavity 334. The third rotor bearing assembly 354 is arranged at the primary joint assembly end 300a between the motor 320 and the primary joint assembly end 300a. The rotor bearing assemblies may be roller bearings. The rotor bearing assemblies 350, 352, 354 may couple the housing (e.g. the first, second and/or third housing part) and the rotor shaft 322, e.g. while allowing rotational movement around the joint axis AxJ between the housing (e.g. the first, second and/or third housing part) and the rotor shaft 322.

In the presently illustrated example, the first housing part 302a accommodates the strain wave gearing system 320, the second housing part 302b accommodates the motor 320, and the third housing part 302c accommodates the first rotor bearing assembly 350. However, as also mentioned previously, some of the housing parts may be integrally formed or may be interchanged. Thus, in some examples, the second housing part 302b may accommodate the first rotor bearing assembly 350 and/or the third housing part 302c may accommodate the motor 320. In some examples, the second housing part 302b may accommodate both the first rotor bearing assembly 350 and the motor 320.

As illustrated particularly in Fig. 4A and as can also be realised from Fig. 3, the first housing part 302a comprises a plurality of first assembly holes 360. The plurality of first assembly holes 360 is arranged circumferentially around the joint axis AxJ. Each of the plurality of first assembly holes 360 extends parallel to the joint axis AxJ. The second housing part 302b comprises a plurality of second assembly holes 362. The plurality of second assembly holes 362 is arranged circumferentially around the joint axis AxJ. Each of the plurality of second assembly holes 362 extends parallel to the joint axis AxJ. The third housing part 302c comprises a plurality of third assembly holes 364. The plurality of third assembly holes 364 is arranged circumferentially around the joint axis AxJ. Each of the plurality of third assembly holes 364 extends parallel to the joint axis AxJ.

Each first assembly hole 360 of the plurality of first assembly holes is aligned with a corresponding second assembly hole 362 of the plurality of second assembly holes. In examples including a third housing part 302c, such as the one illustrated, each first assembly hole 360 of the plurality of first assembly holes is also aligned with a corresponding third assembly hole 364 of the plurality of third assembly holes. The plurality of first assembly holes 360 is a first number of assembly holes. The plurality of second assembly holes 362 is a second number of assembly holes, which preferably is the same as the first number of assembly holes. The plurality of third assembly holes 364 is a third number of assembly holes, which preferably is the same as the first number of assembly holes and/or the second number of assembly holes.

Each first assembly hole 360 and corresponding second assembly hole 362 and third assembly hole 364 are adapted to receive a primary fastening element 366. The primary fastening element(s) 366 is/are inserted into the first assembly hole 360, the second assembly hole 362, and third assembly hole 364 to mechanically fasten the first housing part 302a, the second housing part 302b, and the third housing part 302c together. The primary fastening element(s) 366 is/are inserted parallel to the joint axis AxJ from the secondary joint assembly end 300b towards the primary joint assembly end 300a.

The primary fastening element(s) 366 may be a bolt. The primary fastening element(s) 366 may comprise a head 367 and a shank 368. The shank may extend from the head. When the primary fastening element(s) 366 is/are inserted, the head 367 is arranged towards the secondary joint assembly end 300b and the shank 368 is arranged towards the primary joint assembly end 300a, or in other words, the shank 368 may extend from the head 367 towards the primary joint assembly end 300a.

As is also illustrated in the present figures, the first housing part 302a may comprise a first flange 370 extending perpendicular to the joint axis AxJ. The plurality of first assembly holes 360 may be arranged in the first flange 370, such as extending through the first flange 370. Similarly, the second housing part 302b may comprise a second flange 372 extending perpendicular to the joint axis AxJ. The plurality of second assembly holes 362 may be arranged in the second flange 372, such as extending through the second flange 372.

As illustrated in Fig. 4A, the primary fastening element(s) 366 may further mechanically fasten the first housing part 302a and the robot body element 30 together. Particularly, the primary fastening element(s) 366 may mechanically fasten the first housing part 302a, the second housing part 302b, and the robot body element 30 together. Even further, the primary fastening element(s) 366 may mechanically fasten the first housing part 302a, the second housing part 302b, the third housing part 302c, and the robot body element 30 together. Thus, the primary fastening element(s) 366 may mechanically fasten all housing parts and the robot body element 30 together.

The first housing part 302a comprises a first primary side 380. The first primary side is parallel to the joint axis AxJ and encircling the joint axis AxJ. In the illustrated example, the first primary side 380 extends along the joint axis AxJ from the first flange 370 to the output bearing assembly 310. The first primary side 380 is corrugated. The first primary side 380 comprises a plurality of radial recesses 382. Each first assembly hole 360 of the plurality of first assembly holes 360 is aligned with a corresponding radial recess 382 of the plurality of radial recesses 382. The radial recesses 382 provides space for the fastening elements 366 to be inserted into the first assembly holes 360.

Each of the plurality of radial recesses 380 has a recess length 384 along the joint axis AxJ. In some examples, the recess length 384 may be between 15-35 mm. The recess length 384 may correspond to the length of the fastening element 366 to be used, e.g. the shank length or nominal length of a bolt (i.e. the length of the bolt excluding the head).

Fig. 5 schematically illustrates a cross-sectional view, normal to the joint axis AxJ, of the first housing part 302a, seen in the direction from the secondary joint assembly 300b end and towards the primary joint assembly end 300a. Fig. 5 illustrates the first primary side 380 with the plurality of radial recesses 382. The radial recesses 382 may have various forms. For example, each of the radial recesses 382 may form a circular arc in the plane perpendicular to the joint axis AxJ, as illustrated. However, other forms may be used as appropriate.

Each of the plurality of radial recesses 382 has a recess depth 386 along the radial direction perpendicular to the joint axis AxJ. The first primary side 380 has an inscribed circle 388 with an inscribed circle radius 388R in the plane perpendicular to the joint axis AxJ. The first primary side 380 has a circumscribed circle 390 with a circumscribed circle radius 390R in the plane perpendicular to the joint axis. The recess depth 386 is the difference between the inscribed circle radius 388R and the circumscribed circle radius 390R. In some examples, the recess depth 386 may be between 2-10 mm. For example, the recess depth 386 may correspond to the size (particularly the diameter of the head) of the fastening element 366 to be used.

Fig. 6 schematically illustrates an exemplary output bearing assembly 310, such as the output bearing assembly 310 coupling the output part 304 and the first housing part 302a of the joint assembly 300, as described in relation to the previous figures.

The output bearing assembly 310 comprises an inner part 311, an outer part 313, and a plurality of rollers 312 disposed between the inner part 311 and the outer part 313. The output bearing assembly may be a cross roller bearing, i.e. the rollers 312 may be cylindrical rollers alternatingly angled +/-45 degrees relative to the rotation axis of the bearing assembly.

The outer part 313 is fastened to the first housing part 302a of the joint assembly 300 (cf. Fig. 4A/4B). In some examples, the outer part 313 may form part of the housing 302. The inner part 311 may be fastened to the output part 304 of the joint assembly (cf. Fig. 4A/4B). In some examples, the inner part 311 of the output bearing assembly 310 may (at least partly) form the output part 304. The outer part 313 comprises a plurality of holes 314 for facilitating fastening of the outer part 313 to the first housing part 302a.

Turning back to Figs. 3, 4A and 4B, and as visible from Figs. 3 and 4B, the outer part 313 of the output bearing assembly 310 is fastened to the first housing part 302a by a plurality of secondary fastening elements 392. The secondary fastening elements 392 are arranged circumferentially around the joint axis AxJ. Each of the secondary fastening elements 392 extends parallel to the joint axis AxJ. The first housing part 302a comprises secondary fastening holes 394 (see Figs. 4B and 5) for receiving the secondary fastening elements 392. As seen in Figs. 3 and 5, each of the secondary fastening elements 392 is arranged between two adjacent first assembly holes 360, and between two adjacent radial recesses 382 of the first primary side 380. By arranging the secondary fastening elements 392 between the first assembly holes 360 and between the radial recesses 382, the first housing part 302a has sufficient material thickness for the secondary fastening elements 392 to be fastened thereinto.

Neighbouring first assembly holes 360 are angularly spaced by a first assembly hole angle 396 around the joint axis. For example, as illustrated, the first assembly hole angle 396 may be 20 degrees. Neighbouring secondary fastening elements 392 or the corresponding secondary fastening holes 394 are angularly spaced by a secondary fastening element angle 397 around the joint axis. For example, as illustrated, the first assembly hole angle 396 may be 20 degrees. Preferably, as is also illustrated, the first assembly hole angle 396 and the secondary fastening element angle 397 are the same.

An angular spacing 398 between a first assembly hole of the first assembly holes 360 and a secondary fastening element of the secondary fastening elements 392 (or the corresponding secondary fastening hole 394) is between 30-70% of the first assembly hole angle 396. Preferably, the angular spacing 398 between a first assembly hole 360 and the nearest secondary fastening element 392 (or the corresponding secondary fastening hole 394) is half of the first assembly hole angle 396. For example, as illustrated, the angular spacing 398 may be 10 degrees. The angles and distances are preferably measured between respective centres of the holes and/or fastening elements.

The first assembly holes 360 are arranged along an assembly hole circle 400 (see Fig. 5). The assembly hole circle 400 has an assembly hole circle radius 400R in the cross-sectional plane perpendicular to the joint axis AxJ. The secondary fastening elements 392 and/or the secondary fastening holes 394 are arranged along a secondary fastening element circle 402. The secondary fastening element circle 402 has a secondary fastening element circle radius 402R in the cross-sectional plane. The difference between the assembly hole circle radius 400R and the secondary fastening element circle radius 402R may be minimized, e.g. to facilitate a compact housing of the joint assembly. However, the assembly hole circle radius 400R is preferably larger or at least equal to the secondary fastening element circle radius 402R. For example, the assembly hole circle radius 400R and the secondary fastening element circle radius 402R may differ by less than 5 mm. In some examples, the assembly hole circle radius 400R and the secondary fastening element circle radius 402R may be substantially the same, in which case, the first assembly holes 360, the secondary fastening elements 392 and the secondary fastening holes 394, would be on the same circle, i.e. the assembly hole circle 400 and the secondary fastening element circle 402 would be coinciding.

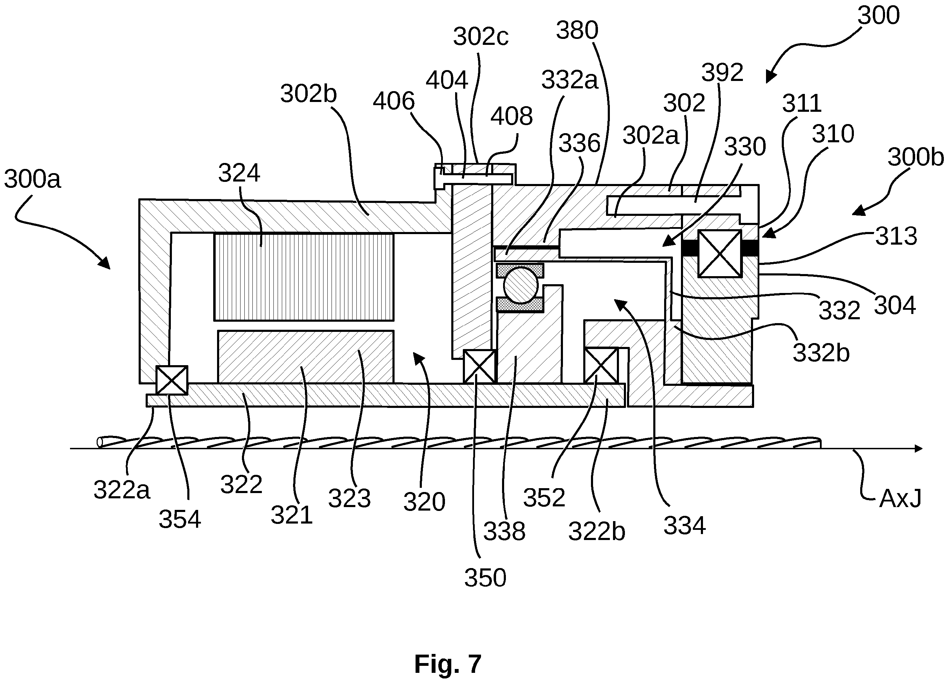

Turning again to Fig 4B, the robot joint assembly 300 comprises a plurality of interim fastening elements 404 mechanically fastening the first housing part 302a and the second housing part 302b together. In the illustrated example, the interim fastening elements 404 also fastens the third housing part 302c together with the first housing part 302a and the second housing part 302b. The plurality of interim fastening elements 404 may include between 2-5 interim fastening elements, such as between 3-4. Thus, the number of interim fastening elements 404 may be less than the number of first assembly holes 360 or the number of primary fastening elements 366. Similarly, the number of interim fastening elements 404 may be less than the number of secondary fastening elements 392 or the number of secondary fastening holes 394. The interim fastening elements 404 may provide an interim fastening together of the housing parts 302a-302c, which provides for the joint assembly 300, as illustrated in Fig. 7, being fully assembled before being fitted with the robot body element 30. Thereby, facilitating easy installation of the joint assembly 300. However, the number of interim fastening elements 404 may be limited and their strength may be less than the primary fastening elements 366, which, when mounted, provide for the full strength coupling of the housing parts 302a-c as well as between the housing 302 and the robot body element 30.

Furthermore, the interim fastening elements 404 facilitate that the joint assembly may be tested and calibrated prior to being installed, because the interim fastening elements 404 fixate the elements of the joint assembly 300 with a strength sufficient to allow testing and calibration of the joint assembly 300. Thereby, a joint assembly is obtained which on the one hand is easy to install and allows testing before being installed, but which also, after being installed, is more compact and has a reduced weight, because the same fastening elements, i.e. the primary fastening elements 366, both fasten the housing parts 302a-c together and fasten the housing 302 to the robot body element 30 together.

Each of the interim fastening elements 404 extends parallel to the joint axis AxJ. Each of the interim fastening elements 404 is inserted parallel to the joint axis AxJ from the primary joint assembly end 300a towards the secondary joint assembly end 300b. The interim fastening elements 404 are inserted in a direction opposite to the direction of insertion of the primary fastening elements 366. For example, the interim fastening element 404 may comprise a head 406 and a shank 408, as illustrated. The head 406 may be arranged towards the primary joint assembly end 300a and the shank 408 may extend from the head 406 towards the secondary joint assembly end 300b.

The interim fastening elements 404 are arranged between two adjacent first assembly holes 360, as can be realised when comparing Figs. 4A and 4B. The interim fastening elements 404 may be arranged along an interim fastening element circle in the cross-sectional plane perpendicular to the joint axis AxJ. For example, the interim fastening elements 404 may be arranged along the same circle as the first assembly holes 360. Accordingly, the interim fastening element circle may be the same as the assembly hole circle 400 (cf. Fig. 5). In case the interim fastening element circle is not the same as the assembly hole circle 400, it is preferred that the difference is minimized, i.e. that the difference between an interim fastening element circle radius of the an interim fastening element circle and the assembly hole circle radius 400R is minimized, e.g. less than 1 mm.

As can be seen from Fig. 4B, the interim fastening elements 404 may be provided at angular positions, where also a secondary fastening element 392 is provided. However, as mentioned previously, there may be fewer interim fastening elements 404 than secondary fastening elements 392. An angular spacing between a first assembly hole 360 and an interim fastening element 404 may be between 30-70% of the first assembly hole angle 396, which is the angular spacing between two neighbouring first assembly holes 360 (cf. Fig. 5). Preferably, the angular spacing between a first assembly hole 360 and the nearest interim fastening element 404 is half of the first assembly hole angle 396 similar to the angular spacing 398 between a first assembly hole 360 and a secondary fastening element 392.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### ITEMS

Some exemplary embodiments of the present disclosure are set out in the following items:
1. A robot joint assembly for forming a joint of a robotic arm extending between a base end and a tool end and comprising a base at the base end and a plurality of joints connecting the base and the tool end, the joint assembly extending along a joint axis between a primary joint assembly end and a secondary joint assembly end and comprising:
   - a housing including a first housing part and a second housing part,
   - an output part arranged at the secondary joint assembly end,
   - an output bearing assembly coupling the output part and the first housing part and allowing rotational movement around the joint axis between the output part and the first housing part,
   - a motor comprising a rotor and a stator, the rotor turning a rotor shaft extending from a primary rotor end to a secondary rotor end,
   - a strain wave gearing system comprising:
      - a flexspline fastened to the output part, and extending between an open flexspline end and a flexspline base, the flexspline is forming a flexspline cavity,
      - a circular spline fastened to the first housing part, and being arranged to encircle the flexspline at the open flexspline end, and
      - a wave generator fastened to the rotor shaft and being arranged inside the flexspline cavity at the open flexspline end,

   wherein the first housing part comprises a plurality of first assembly holes arranged circumferentially around the joint axis and each of the plurality of first assembly holes extending parallel to the joint axis, and wherein the second housing part comprises a plurality of second assembly holes arranged circumferentially around the joint axis and each of the plurality of second assembly holes extending parallel to the joint axis,
   wherein each first assembly hole of the plurality of first assembly holes is aligned with a corresponding second assembly hole of the plurality of second assembly holes and is adapted to receive a primary fastening element being inserted, parallel to the joint axis from the secondary joint assembly end towards the primary joint assembly end, into the first assembly hole and the second assembly hole to mechanically fastening together the first housing part and the second housing part.
2. Robot joint assembly according to item 1, wherein each first assembly hole and the corresponding second assembly hole are adapted to receive the primary fastening element to mechanically fasten the first housing part, the second housing part and a robot body element of the robotic arm together.
3. Robot joint assembly according to any of the preceding items, wherein the first housing part comprises a first primary side parallel to the joint axis and encircling the joint axis, and wherein the first primary side comprises a plurality of radial recesses, wherein each first assembly hole of the plurality of first assembly holes is aligned with a corresponding radial recess of the plurality of radial recesses.
4. Robot joint assembly according to item 3, wherein each of the plurality of radial recesses has a recess length along the joint axis, and wherein the recess length is between 15-35 mm.
5. Robot joint assembly according to any of items 3-4, wherein each of the plurality of radial recesses forms a circular arc in a plane perpendicular to the joint axis.
6. Robot joint assembly according to any of items 3-5, wherein each of the plurality of radial recesses has a recess depth along the radial direction perpendicular to the joint axis, the first primary side has an inscribed circle with an inscribed circle radius in a plane perpendicular to the joint axis, the first primary side has a circumscribed circle with a circumscribed circle radius in the plane perpendicular to the joint axis, wherein the recess depth is the difference between the inscribed circle radius and the circumscribed circle radius, the recess depth may be between 2-10 mm.
7. Robot joint assembly according to any of the preceding items, wherein the first housing part accommodates the strain wave gearing system, and/or wherein the second housing part accommodates the motor.
8. Robot joint assembly according to any of the preceding items, wherein the housing comprises a third housing part, and wherein the third housing part comprises a plurality of third assembly holes arranged circumferentially around the joint axis and each of the plurality of third assembly holes extending parallel to the joint axis, wherein each third assembly hole of the plurality of third assembly holes is aligned with a corresponding first assembly hole of the plurality of first assembly holes and a corresponding second assembly hole of the plurality of second assembly holes, and being adapted to receive the primary fastening element being inserted parallel to the joint axis from the secondary joint assembly end towards the primary joint assembly end into the first assembly hole, the second assembly hole and the third assembly hole to mechanically fasten the first housing part, the second housing part and the third housing part together.
9. Robot joint assembly according to item 8 comprising a rotor bearing assembly coupling the third housing part and the rotor shaft and allowing rotational movement around the joint axis between the third housing part and the rotor shaft, and wherein the third housing part accommodates the rotor bearing assembly.
10. Robot joint assembly according to any of the preceding items, wherein the output bearing assembly comprises an inner part, an outer part, and a plurality of rollers disposed between the inner part and the outer part, wherein the outer part is fastened to the first housing part by a plurality of secondary fastening elements arranged circumferentially around the joint axis, each of the plurality of secondary fastening elements extending parallel to the joint axis.
11. Robot joint assembly according to item 10, wherein each of the plurality of secondary fastening elements is arranged between two neighbouring first assembly holes of the plurality of first assembly holes of the first housing part.
12. Robot joint assembly according to any of items 10-11, wherein neighbouring first assembly holes of the plurality of first assembly holes are angularly spaced by a first assembly hole angle around the joint axis, and wherein an angular spacing between a first assembly hole of the plurality of first assembly holes and a secondary fastening element of the plurality of secondary fastening elements is between 30-70% of the first assembly hole angle.
13. Robot joint assembly according to any of items 10-12, wherein the plurality of first assembly holes is arranged along an assembly hole circle having an assembly hole circle radius in a cross-sectional plane perpendicular to the joint axis, and the plurality of secondary fastening elements is arranged along a secondary fastening element circle having a secondary fastening element circle radius in the cross-sectional plane, and wherein the assembly hole circle radius and the secondary fastening element circle radius differ by less than 5 mm.
14. Robot joint assembly according to any of the preceding items comprising a plurality of interim fastening elements mechanically fastening together the first housing part and the second housing part, each of the plurality of interim fastening elements extending parallel to the joint axis and being inserted parallel to the joint axis from the primary joint assembly end towards the secondary joint assembly end.
15. Robot joint assembly according to item 14, wherein each of the plurality of interim fastening elements is arranged between two adjacent first assembly holes of the plurality of first assembly holes of the first housing part.
16. Robot joint assembly according to any of items 14-15, wherein neighbouring first assembly holes of the plurality of first assembly holes are angularly spaced by a first assembly hole angle around the joint axis, and wherein an angular spacing between a first assembly hole of the plurality of first assembly holes and an interim fastening element of the plurality of interim fastening elements is between 30-70% of the first assembly hole angle.
17. Robot joint assembly according to any of items 14-16 as dependent on item 10, wherein each of the plurality of interim fastening elements is arranged at the same angular position around the joint axis as at least one of the plurality of secondary fastening elements.
18. Robot joint assembly according to any of items 14-17, wherein the plurality of first assembly holes is arranged along an assembly hole circle having an assembly hole circle radius in a cross-sectional plane perpendicular to the joint axis, and the plurality of interim fastening elements is arranged along an interim fastening element circle having an interim fastening element circle radius in a cross-sectional plane perpendicular to the joint axis, and wherein the assembly hole circle radius and the interim fastening element circle radius differ by less than 1 mm.
19. A robotic arm extending between a base end and a tool end and comprising a base at the base end and a plurality of joints including a first joint and a second joint, the plurality of joints connecting the base and the tool end, wherein the robotic arm comprises a first joint assembly according to the robot joint assembly of any of the preceding items, and wherein the first joint assembly extends along a first joint axis and forms the first joint.
20. Robotic arm according to item 19, wherein the robotic arm comprises a robot body element forming the base of the robotic arm, and wherein a plurality of primary fastening elements is inserted parallel to the joint axis from the secondary joint assembly end towards the primary joint assembly end into the first assembly hole and the second assembly hole, and is mechanically fastening the first housing part, the second housing part and the robot body element together.
21. Robotic arm according to any of items 19-20, wherein the robotic arm comprises a second joint assembly according to the robot joint assembly of any of items 1-18, and wherein the second joint assembly extends along a second joint axis and forms the second joint.

### LIST OF REFERENCES

- 1: structure
- 2: robot
- 3: robotic arm
- 4: base
- 6: first joint
- 8: second joint
- 10: third joint
- 12: fourth joint
- 14: fifth joint
- 16: sixth joint
- 18: seventh joint
- 20: base end
- 22: tool end
- 24: fastening bolts
- 26: attachment holes
- 30: robot body element
- 40: link
- 92: primary joint
- 94: secondary joint
- 102: primary motor
- 104: secondary motor
- 108: primary processing unit
- 110: secondary processing unit
- 200: control unit
- 300: robot joint assembly
- 300a: primary joint assembly end
- 300b: secondary joint assembly end
- 302: housing
- 302a: first housing part
- 302b: second housing part
- 302c: third housing part
- 304: output part
- 310: output bearing assembly
- 311: inner part of output bearing assembly
- 312: rollers of output bearing assembly
- 313: outer part of output bearing assembly
- 314: holes
- 320: motor
- 321: rotor
- 322: rotor shaft
- 322a: primary rotor end
- 322b: secondary rotor end
- 323: rotor magnet
- 324: stator
- 330: strain wave gearing system
- 332: flexspline
- 332a: open flexspline end
- 332b: flexspline base
- 334: flexspline cavity
- 336: circular spline
- 338: wave generator
- 350: first rotor bearing assembly
- 352: second rotor bearing assembly
- 354: third rotor bearing assembly
- 360: first assembly hole
- 362: second assembly hole
- 364: third assembly hole
- 366: primary fastening element
- 367: head
- 368: shank
- 370: first flange
- 372: second flange
- 380: first primary side
- 382: radial recess
- 384: recess length
- 386: recess depth
- 388: inscribed circle
- 388R: inscribed circle radius
- 390: circumscribed circle
- 390R: circumscribed circle radius
- 392: secondary fastening elements
- 394: secondary fastening holes
- 396: first assembly hole angle
- 397: secondary fastening element angle
- 398: angular spacing between first assembly hole and secondary fastening element/secondary fastening hole
- 400: assembly hole circle
- 400R: assembly hole circle radius
- 402: secondary fastening element circle
- 402R: secondary fastening element circle radius
- Ax1: first axis
- Ax2: second axis
- Ax3: third axis
- Ax4: fourth axis
- Ax5: fifth axis
- Ax6: sixth axis
- Ax7: seventh axis
- AxJ: joint axis

## Claims

1. A robot joint assembly for forming a joint of a robotic arm extending between a base end and a tool end and comprising a base at the base end and a plurality of joints connecting the base and the tool end, the joint assembly extending along a joint axis between a primary joint assembly end and a secondary joint assembly end and comprising:
- a housing including a first housing part and a second housing part,
- an output part arranged at the secondary joint assembly end,
- an output bearing assembly coupling the output part and the first housing part and allowing rotational movement around the joint axis between the output part and the first housing part,
- a motor comprising a rotor and a stator, the rotor turning a rotor shaft extending from a primary rotor end to a secondary rotor end,
- a strain wave gearing system comprising:
- a flexspline fastened to the output part and extending between an open flexspline end and a flexspline base, the flexspline is forming a flexspline cavity,
- a circular spline fastened to the first housing part and being arranged to encircle the flexspline at the open flexspline end, and
- a wave generator fastened to the rotor shaft and being arranged inside the flexspline cavity at the open flexspline end,
wherein the first housing part comprises a plurality of first assembly holes arranged circumferentially around the joint axis, and each of the plurality of first assembly holes extending parallel to the joint axis, and wherein the second housing part comprises a plurality of second assembly holes arranged circumferentially around the joint axis and each of the plurality of second assembly holes extending parallel to the joint axis,
wherein each first assembly hole of the plurality of first assembly holes is aligned with a corresponding second assembly hole of the plurality of second assembly holes and is adapted to receive a primary fastening element being inserted parallel to the joint axis from the secondary joint assembly end towards the primary joint assembly end into the first assembly hole and the second assembly hole to mechanically fasten the first housing part and the second housing part together.

2. Robot joint assembly according to claim 1, wherein each first assembly hole and the corresponding second assembly hole are adapted to receive the primary fastening element to mechanically fasten the first housing part, the second housing part and a robot body element of the robotic arm together.

3. Robot joint assembly according to any of the preceding claims, wherein the first housing part comprises a first primary side parallel to the joint axis and encircling the joint axis, and wherein the first primary side comprising a plurality of radial recesses, wherein each first assembly hole of the plurality of first assembly holes is aligned with a corresponding radial recess of the plurality of radial recesses.

4. Robot joint assembly according to claim 3, wherein each of the plurality of radial recesses has a recess depth along the radial direction perpendicular to the joint axis, the first primary side may have an inscribed circle with an inscribed circle radius in a plane perpendicular to the joint axis, the first primary side may have a circumscribed circle with a circumscribed circle radius in the plane perpendicular to the joint axis, wherein the recess depth is the difference between the inscribed circle radius and the circumscribed circle radius, the recess depth being between 2-10 mm.

5. Robot joint assembly according to any of the preceding claims, wherein the first housing part accommodates the strain wave gearing system, and/or wherein the second housing part accommodates the motor.

6. Robot joint assembly according to any of the preceding claims, wherein the housing comprises a third housing part, and wherein the third housing part comprises a plurality of third assembly holes arranged circumferentially around the joint axis and each of the plurality of third assembly holes extends parallel to the joint axis, wherein each third assembly hole of the plurality of third assembly holes is aligned with a corresponding first assembly hole of the plurality of first assembly holes and a corresponding second assembly hole of the plurality of second assembly holes, and being adapted to receive the primary fastening element being inserted parallel to the joint axis from the secondary joint assembly end towards the primary joint assembly end into the first assembly hole, the second assembly hole and the third assembly hole to mechanically fasten the first housing part, the second housing part and the third housing part together.

7. Robot joint assembly according to claim 6 comprising a rotor bearing assembly coupling the third housing part and the rotor shaft and allowing for rotational movement around the joint axis between the third housing part and the rotor shaft, and wherein the third housing part accommodates the rotor bearing assembly.

8. Robot joint assembly according to any of the preceding claims, wherein the output bearing assembly comprises an inner part, an outer part, and a plurality of rollers disposed between the inner part and the outer part, wherein the outer part is fastened to the first housing part by a plurality of secondary fastening elements arranged circumferentially around the joint axis, each of the plurality of secondary fastening elements extending parallel to the joint axis.

9. Robot joint assembly according to claim 8, wherein each of the plurality of secondary fastening elements is arranged between two neighbouring first assembly holes of the plurality of first assembly holes of the first housing part.

10. Robot joint assembly according to any of the preceding claims comprising a plurality of interim fastening elements mechanically fastening the first housing part and the second housing part together, each of the plurality of interim fastening elements extending parallel to the joint axis and being inserted parallel to the joint axis from the primary joint assembly end towards the secondary joint assembly end.

11. Robot joint assembly according to claim 10, wherein each of the plurality of interim fastening elements is arranged between two adjacent first assembly holes of the plurality of first assembly holes of the first housing part.

12. Robot joint assembly according to any of claims 10-11 as dependent on claim 8, wherein each of the plurality of interim fastening elements is arranged at the same angular position around the joint axis as at least one of the plurality of secondary fastening elements.

13. Robot joint assembly according to any of claims 10-12, wherein the plurality of first assembly holes is arranged along an assembly hole circle having an assembly hole circle radius in a cross-sectional plane perpendicular to the joint axis, and the plurality of interim fastening elements is arranged along an interim fastening element circle having an interim fastening element circle radius in a cross-sectional plane perpendicular to the joint axis, and wherein the assembly hole circle radius and the interim fastening element circle radius differ by less than 1 mm.

14. A robotic arm extending between a base end and a tool end and comprising a base at the base end and a plurality of joints including a first joint and a second joint, the plurality of joints connecting the base and the tool end, wherein the robotic arm comprises a first joint assembly according to the robot joint assembly of any of the preceding claims, and wherein the first joint assembly extends along a first joint axis and forms the first joint.

15. Robotic arm according to claim 14, wherein the robotic arm comprises a robot body element forming the base of the robotic arm, and wherein a plurality of primary fastening elements is inserted parallel to the joint axis from the secondary joint assembly end towards the primary joint assembly end into the first assembly hole and the second assembly hole, and is mechanically fastening the first housing part, the second housing part and the robot body element together.
